(19) **Europäisches Patentamt European Patent Office Office européen des brevets**

(11) **EP 4 657 737 A1**

(12) **EUROPEAN PATENT APPLICATION**
published in accordance with Art. 153(4) EPC

(43) Date of publication:
03.12.2025  Bulletin 2025/49

(21) Application number: 24747140.2

(22) Date of filing: 12.01.2024

(51) International Patent Classification (IPC):
*H02M 3/00* (2006.01)

(52) Cooperative Patent Classification (CPC):
**H02M 3/00**

(86) International application number:
**PCT/JP2024/000695**

(87) International publication number:
**WO 2024/157809 (02.08.2024 Gazette 2024/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 23.01.2023  JP 2023008409

(71) Applicant: **Panasonic Intellectual Property Management Co., Ltd.**
**Kadoma-shi, Osaka 571-0057 (JP)**

(72) Inventor: **SAWADA, Naoki**
**Kadoma-shi, Osaka 571-0057 (JP)**

(74) Representative: **Novagraaf International SA**
**Chemin de l'Echo 3**
**1213 Onex, Geneva (CH)**

(54) **BOOST CONVERTER**

(57)  The problem is to contribute to downsizing while reducing common mode noise. A boost converter (100) includes a positive electrode input terminal (T1) and a negative electrode input terminal (T2), a positive electrode output terminal (T3) and a negative electrode output terminal (T4), a first positive-side wiring section (W11), a first negative-side wiring section (W12), a second positive-side wiring section (W21), a second negative-side wiring section (W22), a first capacitor (1), a first switching element (Q1), a second switching element (Q2), a first inductor (11), a second inductor (12), a second capacitor (2), a third capacitor (3), a fourth capacitor (4), a third inductor (13), a fourth inductor (14), a ground conductor member (9), a fifth capacitor (5), a sixth capacitor (6), and a seventh capacitor (7). The seventh capacitor (7) is connected between a third node (N3) and the fourth capacitor (4).

FIG. 1

EP 4 657 737 A1

**Description**

**Technical Field**

The present disclosure generally relates to a boost converter, and more particularly relates to a boost converter including a switching element.

**Background Art**

Recently, the switching frequency of switching elements has been increased more and more significantly to reduce the size of passive components included in a switching power supply circuit. Nevertheless, an increase in the switching frequency would lead to an increase in electromagnetic noise. In particular, in switching power supply circuits, common mode noise will dominate on the frequency band of 1 MHz to 300 MHz (hereinafter referred to as a "MHz band"). That is why it is important to reduce the common mode noise to deal with such a significant increase in the switching frequency.

Patent Literature 1 discloses a power supply circuit having the ability to reduce the common mode noise.

The power supply circuit of Patent Literature 1 includes a DC/DC converter and a choke coil. The DC/DC converter includes a switching element for switching a DC input voltage supplied from a DC power supply and supplies, to a load, a DC output voltage according to the duty cycle of the on-time to off-time of the switching element. The DC/DC converter may be implemented as, for example, a boost chopper circuit in which the switching element is connected to the DC power supply in parallel to boost the DC input voltage.

The choke coil includes a pair of winding wires which are wound in mutually opposite directions and are connected between the DC power supply and the DC/DC converter. The power supply circuit of Patent Literature 1 reduces the noise generated between the DC power supply and the load by using the choke coil.

As the switching frequency increases, the power supply circuit of Patent Literature 1 needs to increase the impedance of the choke coil serving as a noise filter, thus sometimes causing an increase in the size of the choke coil and thereby posing an obstacle to downsizing of the power supply circuit.

**Citation List**

**Patent Literature**

Patent Literature 1: WO 2017/002550 A1

**Summary of Invention**

An object of the present disclosure is to provide a boost converter having the ability to contribute to downsizing while reducing the common mode noise.

A boost converter according to an aspect of the present disclosure includes a positive electrode input terminal and a negative electrode input terminal, a positive electrode output terminal and a negative electrode output terminal, a first positive-side wiring section, a first negative-side wiring section, a second positive-side wiring section, a second negative-side wiring section, a first capacitor, a first switching element, a second switching element, a first inductor, a second inductor, a second capacitor, a third capacitor, a fourth capacitor, a third inductor, a fourth inductor, a ground conductor member, a fifth capacitor, a sixth capacitor, and a seventh capacitor. The first positive-side wiring section is connected to the positive electrode input terminal. The first negative-side wiring section is connected to the negative electrode input terminal. The second positive-side wiring section is connected to the positive electrode output terminal. The second negative-side wiring section is connected to the negative electrode output terminal. The first capacitor is connected between a first node of the first positive-side wiring section and a second node of the first negative-side wiring section. The first switching element is connected between the first positive-side wiring section and the second positive-side wiring section. The second switching element is connected between the first switching element and the first negative-side wiring section. The first inductor is provided between a third node where the first switching element and the second switching element are connected together and the first node. The second inductor is provided between a connection node where the second switching element is connected to the first negative-side wiring section and the second node. The second capacitor is connected to the first inductor in parallel. The third capacitor is connected between a fourth node of the second positive-side wiring section and a fifth node of the second negative-side wiring section. The fourth capacitor is connected between a sixth node of the second positive-side wiring section and a seventh node of the second negative-side wiring section. The third inductor is provided between the fourth node and the sixth node. The fourth inductor is provided between the fifth node and the seventh node. The fifth capacitor is connected between an eighth node of the second positive-side wiring section and the ground conductor member. The sixth capacitor connected is between a ninth node of the second negative-side wiring section and the ground conductor member. The seventh capacitor is connected between the third node and the fourth capacitor.

**Brief Description of Drawings**

FIG. 1 is a schematic circuit diagram of a boost converter according to a first embodiment;
FIG. 2 is a circuit diagram of the boost converter;
FIG. 3 is a circuit diagram illustrating an equivalent circuit of the boost converter on a MHz band;
FIG. 4 is a circuit diagram used to simulate noise generated in the boost converter;
FIG. 5 is a graph showing the frequency characteristics of noise generated in the boost converter and noise generated in a boost converter according to a comparative example;
FIG. 6 is a circuit diagram of a boost converter according to a first variation of the first embodiment;
FIG. 7 is a schematic circuit diagram of a boost converter according to a second variation of the first embodiment;
FIG. 8 is a schematic circuit diagram of a boost converter according to a second embodiment;
FIG. 9 is a circuit diagram illustrating an equivalent circuit of the boost converter on a MHz band; and
FIG. 10 is a circuit diagram of a boost converter circuit according to a third embodiment.

**Description of Embodiments**

(First embodiment)

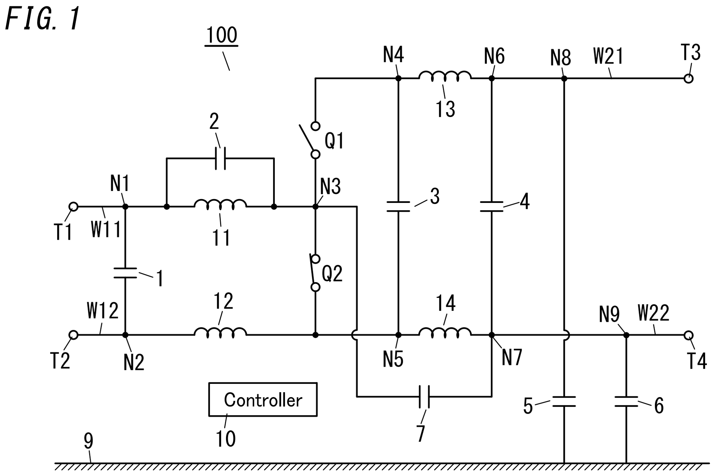

A boost converter 100 according to a first embodiment will now be described with reference to FIGS. 1-3.

(1) Overview

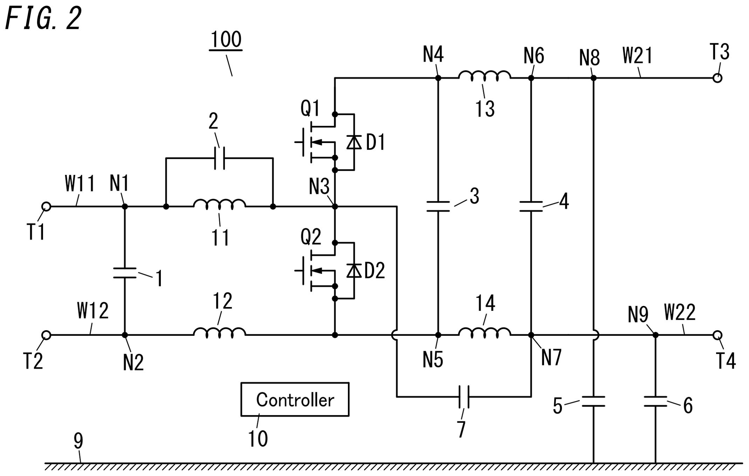

The boost converter 100 includes a positive electrode input terminal T1 and a negative electrode input terminal T2, and a positive electrode output terminal T3 and a negative electrode output terminal T4 as shown in FIGS. 1 and 2. The boost converter 100 converts a first voltage input to between the positive electrode input terminal T1 and the negative electrode input terminal T2 into a second voltage larger than the first voltage and outputs the second voltage to between the positive electrode output terminal T3 and the negative electrode output terminal T4. In the boost converter 100, a DC power supply, for example, may be connected between the positive electrode input terminal T1 and the negative electrode input terminal T2 and a load, for example, may be connected between the positive electrode output terminal T3 and the negative electrode output terminal T4.

(2) Details

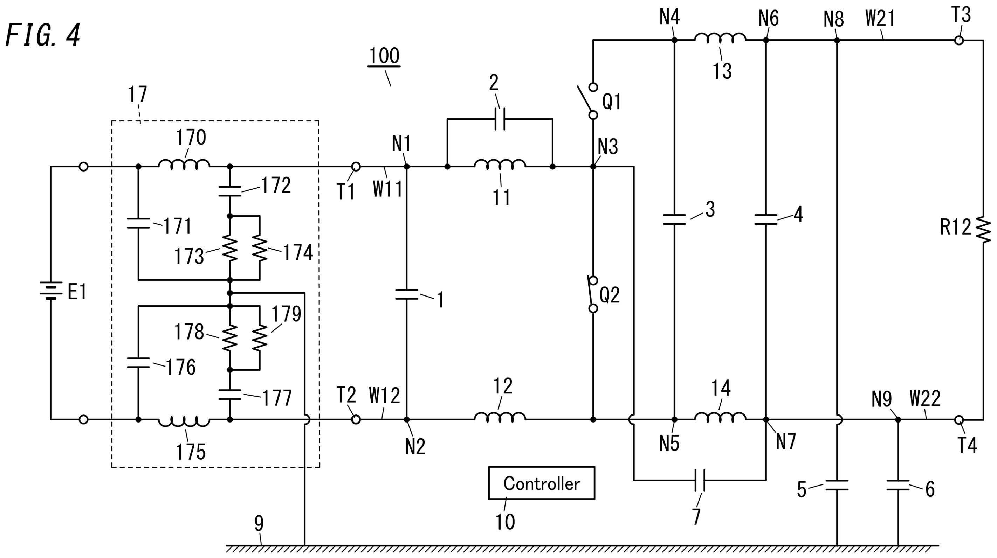

As shown in FIG. 1, the boost converter 100 includes the positive electrode input terminal T1 and the negative electrode input terminal T2, the positive electrode output terminal T3 and the negative electrode output terminal T4, a first positive-side wiring section W11, a first negative-side wiring section W12, a second positive-side wiring section W21, and a second negative-side wiring section W22. The boost converter 100 further includes a first capacitor 1, a first switching element Q1, a second switching element Q2, a first inductor 11, a second inductor 12, a second capacitor 2, a third capacitor 3, a fourth capacitor 4, a third inductor 13, and a fourth inductor 14. The boost converter 100 further includes a ground conductor member 9, a fifth capacitor 5, a sixth capacitor 6, and a seventh capacitor 7. The boost converter 100 further includes a controller 10.
The positive electrode input terminal T1 may be connected, for example, to a higher potential output terminal (i.e., positive electrode) of a DC power supply E1 (refer to FIG. 4). The DC power supply E1 may include a battery, for example. However, this is only an example and should not be construed as limiting. Alternatively, the DC power supply E1 may also include a DC/DC converter or an AC/DC converter.
The negative electrode input terminal T2 may be connected, for example, to a lower potential output terminal (i.e., negative electrode) of the DC power supply E1 (refer to FIG. 4).
A load R12 (refer to FIG. 4), for example, may be connected between the positive electrode output terminal T3 and the negative electrode output terminal T4. Alternatively, in the boost converter 100, a DC/AC converter, for example, may be connected, instead of the load R12, between the positive electrode output terminal T3 and the negative electrode output terminal T4.
The first positive-side wiring section W11 is connected to the positive electrode input terminal T1. That is to say, the first positive-side wiring section W11 is a wiring section connected to the positive electrode input terminal T1 in the boost converter 100. More specifically, the first positive-side wiring section W11 is a wiring section between the positive electrode input terminal T1 and the first switching element Q1. In other words, the first positive-side wiring section W11 is an input positive electrode bus line.

The first negative-side wiring section W12 is connected to the negative electrode input terminal T2. That is to say, the first negative-side wiring section W12 is a wiring section connected to the negative electrode input terminal T2 in the boost converter 100. The first negative-side wiring section W12 has a first end and a second end. The negative electrode input terminal T2 is connected to the first end of the first negative-side wiring section W12. The second switching element Q2 is connected to the second end of the first negative-side wiring section W12. Thus, the second switching element Q2 is connected between the first positive-side wiring section W11 and the first negative-side wiring section W12. The first negative-side wiring section W12 is an input negative electrode bus line.

The second positive-side wiring section W21 is connected to the positive electrode output terminal T3. That is to say, the second positive-side wiring section W21 is a wiring section connected to the positive electrode output terminal T3 in the boost converter 100. The second positive-side wiring section W21 is a wiring section between the first switching element Q1 and the positive electrode output terminal T3. The second positive-side wiring section W21 is an output positive electrode bus line.

The second negative-side wiring section W22 is connected to the negative electrode output terminal T4. That is to say, the second negative-side wiring section W22 is a wiring section connected to the negative electrode output terminal T4 in the boost converter 100. The second negative-side wiring section W22 has a first end and a second end. The first end of the second negative-side wiring section W22 is connected to the second switching element Q2 and the second end of the first negative-side wiring section W12. The second end of the second negative-side wiring section W22 is connected to the negative electrode output terminal T4. The second negative-side wiring section W22 is an output negative electrode bus line.

The first capacitor 1 is connected between a first node N1 of the first positive-side wiring section W11 and a second node N2 of the first negative-side wiring section W12. In other words, the first capacitor 1 is connected between the positive electrode input terminal T1 and the negative electrode input terminal T2. The first capacitor 1 has a first end and a second end. In the first capacitor 1, the first end of the first capacitor 1 is connected to the first node N1 of the first positive-side wiring section W11 and the second end of the first capacitor 1 is connected to the second node N2 of the first negative-side wiring section W12. The first capacitor 1 has the function of serving as a smoothing capacitor. The first capacitor 1 may be, for example, an electrolytic capacitor. The capacitance of the first capacitor 1 may be, for example, equal to or greater than 200 nF and equal to or less than 500 $\mu$F.

The first switching element Q1 is connected to the first positive-side wiring section W11. The second switching element Q2 is connected between the first switching element Q1 and the first negative-side wiring section W12.

Each of the first switching element Q1 and the second switching element Q2 may be, for example, a normally OFF n-channel metal-oxide semiconductor field effect transistor (MOSFET) as shown in FIG. 2. In FIG. 2, a first diode D1 connected to the first switching element Q1 in antiparallel is a parasitic diode for the n-channel MOSFET serving as the first switching element Q1. However, this is only an example and should not be construed as limiting. Alternatively, the first diode D1 may also be an external diode. Also, a second diode D2 connected to the second switching element Q2 in antiparallel is a parasitic diode for the n-channel MOSFET serving as the second switching element Q2. However, this is only an example and should not be construed as limiting. Alternatively, the second diode D2 may also be an external diode. In the example shown in FIG. 2, each of the first switching element Q1 and the second switching element Q2 includes a first main terminal (drain terminal), a second main terminal (source terminal), and a control terminal (gate terminal). In the example shown in FIG. 2, the first main terminal of the first switching element Q1 is connected to the second positive-side wiring section W21, the second main terminal of the first switching element Q1 is connected to the first main terminal of the second switching element Q2, and the second main terminal of the second switching element Q2 is connected to the first negative-side wiring section W12. In the first diode D1, the anode of the first diode D1 is connected to the second main terminal (source terminal) of the first switching element Q1 and the cathode of the first diode D1 is connected to the first main terminal (drain terminal) of the first switching element Q1. In the second diode D2, the anode of the second diode D2 is connected to the second main terminal (source terminal) of the second switching element Q2 and the cathode of the second diode D2 is connected to the first main terminal (drain terminal) of the second switching element Q2.

In this boost converter 100, the first switching element Q1 and the second switching element Q2 are controlled by the controller 10. In the boost converter 100, the first switching element Q1 and the second switching element Q2 are alternately turned ON and OFF. The switching frequency of the first switching element Q1 and the second switching element Q2 may be, for example, equal to or higher than 1 kHz and equal to or lower than 1 MHz.

The first inductor 11 is provided between the first node N1 and a third node N3. From the viewpoint of circuit configuration, the third node N3 is a connection node between the first switching element Q1 and the second switching element Q2. The first inductor 11 may be, for example, a choke coil. The inductance of the first inductor 11 may be, for example, equal to or greater than 200 nH and equal to or less than 30 $\mu$H.

The second inductor 12 is provided between the second node N2 and the second negative-side wiring section W22. The inductance of the second inductor 12 is smaller than the inductance of the first inductor 11. The inductance of the second inductor 12 may be, for example, equal to or greater than 2 nH and equal to or less than 30 nH. The second inductor 12 may be configured by, for example, a part of the first negative-side wiring section W12. In other words, the second inductor 12 is configured by, for example, a parasitic inductance component in a part, located between the second node N2 and the second negative-side wiring section W22, of the first negative-side wiring section W12. In this case, the inductance of the second inductor 12 may be calculated, for example, by either three-dimensional electromagnetic field analysis or impedance measurement as a parasitic inductance component formed in the part, located between the second node N2 and the second negative-side wiring section W22, of the first negative-side wiring section W12 on the circuit board.

The second capacitor 2 is connected to the first inductor 11 in parallel. The capacitance of the second capacitor 2 is smaller than the capacitance of any of the first capacitor 1, the third capacitor 3, or the fourth capacitor 4. The second capacitor 2 may be implemented as, for example, interwinding capacitance of the first inductor 11. In this case, the capacitance of the second capacitor 2 may be calculated by, for example, either three-dimensional electromagnetic field analysis or impedance measurement as the interwinding capacitance of the first inductor 11 as a choke coil. Thus, the capacitance of the second capacitor 2 may be determined uniquely by the winding wire structure of the first inductor 11 as a choke coil.

The third capacitor 3 is connected between a fourth node N4 of the second positive-side wiring section W21 and a fifth node N5 of the second negative-side wiring section W22. In other words, the third capacitor 3 is connected to a series circuit of the first switching element Q1 and the second switching element Q2 in parallel. The third capacitor 3 has the function of serving as a smoothing capacitor. The third capacitor 3 may be, for example, an electrolytic capacitor. The capacitance of the third capacitor 3 may be, for example, equal to or greater than 200 nF and equal to or less than 500 μF.

The fourth capacitor 4 is connected between a sixth node N6 of the second positive-side wiring section W21 and a seventh node N7 of the second negative-side wiring section W22. In other words, the fourth capacitor 4 is connected between the positive electrode output terminal T3 and the negative electrode output terminal T4. The fourth capacitor 4 has a first end and a second end. In the fourth capacitor 4, the first end of the fourth capacitor 4 is connected to the sixth node N6 of the second positive-side wiring section W21 and the second end of the fourth capacitor 4 is connected to the seventh node N7 of the second negative-side wiring section W22. The fourth capacitor 4 has the function of serving as a smoothing capacitor. The fourth capacitor 4 may be, for example, an electrolytic capacitor. The capacitance of the fourth capacitor 4 may be, for example, equal to or greater than 200 nF and equal to or less than 500 μF.

The third inductor 13 is connected between the fourth node N4 and sixth node N6 of the second positive-side wiring section W21. The inductance of the third inductor 13 is smaller than the inductance of the first inductor 11. The inductance of the third inductor 13 may be, for example, equal to or greater than 2 nH and equal to or less than 30 nH. The third inductor 13 may be configured by, for example, a part of the second positive-side wiring section W21. In other words, the third inductor 13 is configured by, for example, a parasitic inductance component in a part, located between the fourth node N4 and sixth node N6, of the second positive-side wiring section W21. In this case, the inductance of the third inductor 13 may be calculated, for example, by either three-dimensional electromagnetic field analysis or impedance measurement as a parasitic inductance component formed in the part, located between the fourth node N4 and sixth node N6, of the second positive-side wiring section W21 on the circuit board.

The fourth inductor 14 is connected between the fifth node N5 and seventh node N7 of the second negative-side wiring section W22. The inductance of the fourth inductor 14 is smaller than the inductance of the first inductor 11. The inductance of the fourth inductor 14 may be, for example, equal to or greater than 2 nH and equal to or less than 30 nH. The fourth inductor 14 may be configured by, for example, a part of the second negative-side wiring section W22. In other words, the fourth inductor 14 is configured by, for example, a parasitic inductance component in a part, located between the fifth node N5 and seventh node N7, of the second negative-side wiring section W22. In this case, the inductance of the fourth inductor 14 may be calculated, for example, by either three-dimensional electromagnetic field analysis or impedance measurement as a parasitic inductance component formed in the part, located between the fifth node N5 and seventh node N7, of the second negative-side wiring section W22 on the circuit board.

The ground conductor member 9 may be configured, for example, as the housing of the boost converter 100. The housing houses the circuit module of the boost converter 100. The circuit module includes a circuit board (e.g., a printed wiring board) and a plurality of circuit components mounted on the circuit board. The plurality of circuit components includes the first capacitor 1, the first switching element Q1, the second switching element Q2, the first inductor 11, the third capacitor 3, and the fourth capacitor 4. The housing has electrical conductivity. A material for the housing may be, for example, a metal or an alloy. The housing has the function of shielding surrounding components from a leakage magnetic field generated in the boost converter 100. Alternatively, the ground conductor member 9 may be the ground conductor included in the circuit board.

The fifth capacitor 5 is connected between an eighth node N8 of the second positive-side wiring section W21 and the ground conductor member 9. The eighth node N8 is located between the sixth node N6 of the second positive-side wiring section W21 and the positive electrode output terminal T3. The capacitance of the fifth capacitor 5 is smaller than the capacitance of any of the first capacitor 1, the third capacitor 3, or the fourth capacitor 4. Optionally, the fifth capacitor 5 may be a parasitic capacitance produced between the second positive-side wiring section W21 and the ground conductor member 9.

The sixth capacitor 6 is connected between a ninth node N9 of the second negative-side wiring section W22 and the ground conductor member 9. The ninth node N9 is located between the seventh node N7 of the second negative-side wiring section W22 and the negative electrode output terminal T4. The capacitance of the sixth capacitor 6 is smaller than the capacitance of any of the first capacitor 1, the third capacitor 3, or the fourth capacitor 4. Optionally, the sixth capacitor 6 may be a parasitic capacitance produced between the second negative-side wiring section W22 and the ground conductor member 9.

The seventh capacitor 7 is connected between the third node N3 and the fourth capacitor 4.

The controller 10 controls the first switching element Q1 and the second switching element Q2. The agent that performs the functions of the controller 10 includes a computer system. The computer system includes a single or a plurality of computers. The computer system may include a processor and a memory as principal hardware components thereof. The computer system serves as the agent that performs the functions of the controller 10 according to the present disclosure by making the processor execute a program stored in the memory of the computer system. The program may be stored in advance in the memory of the computer system. Alternatively, the program may also be downloaded through a telecommunications line or be distributed after having been recorded in a non-transitory storage medium such as a memory card, an optical disc, or a hard disk drive (magnetic disk), any of which is readable for the computer system. The processor of the computer system may be made up of a single or a plurality of electronic circuits including a semiconductor integrated circuit (IC) or a large-scale integrated circuit (LSI). Those electronic circuits may be either integrated together on a single chip or distributed on multiple chips, whichever is appropriate. Those multiple chips may be aggregated together in a single device or distributed in multiple devices without limitation.

The controller 10 outputs a first control signal for controlling the ON/OFF states of the first switching element Q1 and a second control signal for controlling the ON/OFF states of the second switching element Q2. Each of the first and second control signals may be, for example, a pulse width modulation (PWM) signal having, for example, a potential level that alternates between a first potential level (hereinafter referred to as a "low level") and a second potential level (hereinafter referred to as a "high level") higher than the first potential level. The first switching element Q1 turns ON when the first control signal has the high level and turns OFF when the first control signal has the low level. The second switching element Q2 turns ON when the second control signal has the high level and turns OFF when the second control signal has the low level. In addition, to prevent the respective ON periods of the first switching element Q1 and the second switching element Q2 from overlapping with each other, the controller 10 sets a dead time period between a high-level period of the first control signal and a high-level period of the second control signal.

In the following description, the circuit constants of the respective constituent elements will be defined as follows:

In this description, the capacitance of the first capacitor 1 will be designated by C1, the capacitance of the second capacitor 2 will be designated by C2, the capacitance of the third capacitor 3 will be designated by C3, the capacitance of the fourth capacitor 4 will be designated by C4, the capacitance of the fifth capacitor 5 will be designated by C5, the capacitance of the sixth capacitor 6 will be designated by C6, and the capacitance of the seventh capacitor 7 will be designated by C7.

Also, in this description, the inductance of the first inductor 11 will be designated by L1, the inductance of the second inductor 12 will be designated by L2, the inductance of the third inductor 13 will be designated by L3, and the inductance of the fourth inductor 14 will be designated by L4.

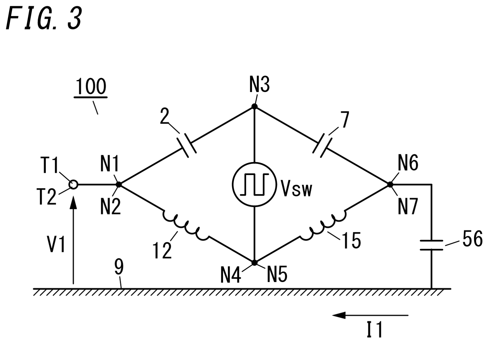

FIG. 3 is a circuit diagram illustrating an equivalent circuit of the boost converter 100 on the MHz band as shown in FIG. 1. In FIG. 3, the inductor 15 is an inductor having parallel combined inductance (= $(L3 \times L4) / (L3 + L4)$) of the third inductor 13 and the fourth inductor 14. Also, in FIG. 3, the capacitor 56 is a capacitor having parallel combined capacitance (= C5 + C6) of the fifth capacitor 5 and the sixth capacitor 6.

Each of the first capacitor 1, the third capacitor 3, and the fourth capacitor 4 is a smoothing capacitor and has a relatively large capacitance equal to or greater than 200 nF and equal to or less than 500 μF, for example. In the boost converter 100, the respective impedances of the first capacitor 1, the third capacitor 3, and the fourth capacitor 4 on the MHz band are smaller to a negligible degree than the respective impedances of the third inductor 13, the fourth inductor 14, and the second capacitor 2 on the MHz band. Thus, in the equivalent circuit of the boost converter 100 on the MHz band, the first node N1 and the second node N2 may be regarded as being short-circuited with each other, and therefore, may be regarded as the same node. In addition, in the equivalent circuit of the boost converter 100 on the MHz band, the fourth node N4 and the fifth node N5 may be regarded as being short-circuited with each other, and therefore, may be regarded as the same node. Furthermore, in the equivalent circuit of the boost converter 100 on the MHz band, the sixth node N6 and the seventh node N7 may be regarded as being short-circuited with each other, and therefore, may be regarded as the same node.

Furthermore, the first inductor 11 is a choke coil and has an inductance equal to or greater than 200 nH and equal to or less than 30 μH, for example. In the boost converter 100, the impedance of the first inductor 11 on the MHz band is much larger than the impedance of each of the third inductor 13 and the fourth inductor 14 on the MHz band. Therefore, in the equivalent circuit of the boost converter 100 on the MHz band, the part including the first inductor 11 may be regarded as being open.

In the equivalent circuit diagram of the boost converter 100 on the MHz band, a switching circuit section including the first switching element Q1 and the second switching element Q2 is connected between the third node N3, the fourth node N4, and the fifth node N5 as a noise source which generates a voltage Vsw between the third node N3 and the fourth node N4 (or the fifth node N5) due to the operations of the first switching element Q1 and the second switching element Q2.

The common mode noise generated in the boost converter 100 on the MHz band derives, if mode conversion outside of the circuit of the boost converter 100 is ignored, from either the potential V1 (common mode voltage V1) at the first node N1 (or the second node N2) with respect to the ground conductor member 9 or a current I1 (hereinafter also referred to as a "common mode current I1") flowing through the ground conductor member 9.

The equivalent circuit shown in FIG. 3 has the Wheatstone circuit configuration. Thus, if the condition that the ratio of the impedance of the second capacitor 2 to the impedance of the second inductor 12 be equal to the ratio of the impedance of the seventh capacitor 7 to the parallel combined impedance of the third inductor 13 and the fourth inductor 14 is satisfied, then the voltage transfer coefficient (= V1/Vsw) from the switching circuit section to the positive electrode input terminal T1 and the negative electrode input terminal T2 will be zero. That is to say, if the condition expressed by the following equation (1) is satisfied, the voltage transfer coefficient will be ideally equal to zero.

$$\frac{1}{\omega C2} : \omega L2 = \frac{1}{\omega C7} : \frac{\omega L3 \times \omega L4}{\omega L3 + \omega L4} \tag{1}$$

where $\omega$ is an angular frequency.

In the equation (1), the angular frequency $\omega$ may be canceled on both sides. Thus, the equation (1) may be modified into the following equation (2):

$$\frac{1}{C2} : L2 = \frac{1}{C7} : \frac{L3 \times L4}{L3 + L4} \tag{2}.$$

The boost converter 100 may reduce, by designing respective circuit constants (L2, L3, L4, C2, C7) to satisfy the condition defined by the equation (2) (hereinafter referred to as an "impedance balance condition"), the generation of the common mode noise due to the operations of the first switching element Q1 and the second switching element Q2 irrespective of the frequency on the MHz band.

In this case, the equation (2) may be modified into the following equation (3):

$$C7 = C2 \times \left\{ L2 \div \left( \frac{L3 \times L4}{L3 + L4} \right) \right\} \tag{3}$$

Thus, the boost converter 100 may reduce, by designing respective circuit constants (L2, L3, L4, C2, C7) to satisfy the condition defined by the equation (3), the generation of the common mode noise due to the operations of the first switching element Q1 and the second switching element Q2 irrespective of the frequency on the MHz band.

To reduce the generation of the common mode noise compared to a situation where the seventh capacitor 7 is not provided, the capacitance C7 of the seventh capacitor 7 does not have to have a value satisfying the impedance balance condition but may also have, for example, a value a half to twice as large as the value when the impedance balance condition is satisfied. That is to say, the capacitance C7 of the seventh capacitor 7 may have a value satisfying the following equation (4):

$$0.5 \times C2 \times \left\{ L2 \div \left( \frac{L3 \times L4}{L3 + L4} \right) \right\} \leqq C7 \leqq 2 \times C2 \times \left\{ L2 \div \left( \frac{L3 \times L4}{L3 + L4} \right) \right\} \tag{4}$$

That is to say, even if the impedance balance condition is not satisfied, the boost converter 100 may also reduce the common mode noise compared to a configuration including no seventh capacitor 7, as long as the capacitance C7 of the seventh capacitor 7 has a value a half to twice as large as the value when the impedance balance condition is satisfied.

(3) Characteristics

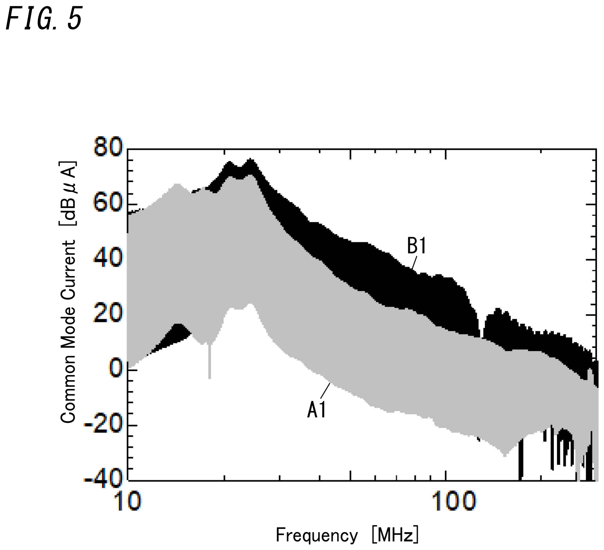

In FIG. 5, the reference sign A1 indicates the frequency characteristics of a common mode current I1 (refer to FIG. 3) generated when a first example of the boost converter 100 according to the first embodiment is allowed to operate with the DC power supply E1 and the load R12 connected thereto as shown in FIG. 4. The common mode current I1 includes a current flowing from the third node N3 to the ground conductor member 9 via the sixth node N6 and the fifth capacitor 5 and a current flowing from the third node N3 to the ground conductor member 9 via the seventh node N7 and the sixth capacitor 6.

In the circuit shown in FIG. 4, the DC power supply E1 is connected between the positive electrode input terminal T1 and the negative electrode input terminal T2 of the boost converter 100 via a pseudo power supply circuit network 17. In the example illustrated in FIG. 4, the pseudo power supply circuit network 17 is a circuit network for stabilizing the power supply impedance when the DC power supply E1 is viewed from the boost converter 100. In the example illustrated in FIG. 4, the pseudo power supply circuit network 17 includes two inductors 170, 175, four capacitors 171, 172, 176, 177, and four resistors 173, 174, 178, 179. Also, in the example illustrated in FIG. 4, the load R12 is a load resistor.

The frequency characteristics of the common mode current I1 as indicated by the reference sign A1 in FIG. 5 were obtained by calculating the common mode current I1 flowing through the ground conductor member 9 by a transient analysis using a simulation model of the circuit shown in FIG. 4 and subjecting the common mode current I1 to a fast Fourier transform. On the other hand, the reference sign B1 shown in FIG. 5 indicates the frequency characteristics of a common mode current in a boost converter according to a comparative example. The boost converter according to the comparative example does not include the seventh capacitor 7 of the boost converter 100 according to the first embodiment.

As for the first example described above, the circuit constants of the respective constituent elements thereof were set at the values shown in the following Table 1 such that the impedance balance condition would be satisfied. Also, as for each of the first capacitor 1, the third capacitor 3, the fourth capacitor 4, the fifth capacitor 5, and the sixth capacitor 6, the equivalent series resistance (ESR) and equivalent series inductance (ESL) thereof were taken into account.

[Table 1]

| Constituent Element | Circuit Constant |
| --- | --- |
| First Capacitor 1 | C1 = 470 μF |
| Third Capacitor 3 | C3 = 470 μF |
| Fourth Capacitor 4 | C4 = 470 μF |
| ESR of First Capacitor 1 | 10 mΩ |
| ESR of Third Capacitor 3 | 10 mΩ |
| ESR of Fourth Capacitor 4 | 10 mΩ |
| ESL of First Capacitor 1 | 10 nH |
| ESL of Third Capacitor 3 | 10 nH |
| ESL of Fourth Capacitor 4 | 10 nH |
| First Inductor 11 | L1 = 10 μH |
| Second Inductor 12 | L2 = 10 nH |
| Third Inductor 13 | L3 = 10 nH |
| Fourth Inductor 14 | L4 = 10 nH |
| Second Capacitor 2 | C2 = 2nF |
| Fifth Capacitor 5 | C5 = 10 nF |
| Sixth Capacitor 6 | C6 = 10 nF |
| ESR of Fifth Capacitor 5 | 100 mΩ |
| ESR of Sixth Capacitor 6 | 100 mΩ |
| ESL of Fifth Capacitor 5 | 5 nH |

(continued)

| Constituent Element | Circuit Constant |
|---|---|
| ESL of Sixth Capacitor 6 | 5 nH |
| Seventh Capacitor 7 | C7= 4nF |
| Load (Load Resistor) R12 | 4 Ω |
| Inductors 170, 175 | 50 μH |
| Capacitors 171, 176 | 1 μF |
| Capacitors 172, 177 | 100 nF |
| Resistors 173, 178 | 1 kΩ |
| Resistors 174, 179 | 50 Ω |

Also, the frequency characteristics of the common mode current I1 according to the first example as indicated by the reference sign A1 in FIG. 5 were obtained when the output voltage of the DC power supply E1 was set at 12 V, the switching frequency of each of the first switching element Q1 and the second switching element Q2 was set at 100 kHz, and the output power of the boost converter 100 was set at 144 W. The frequency characteristics of the common mode current according to the comparative example as indicated by the reference sign B1 shown in FIG. 5 were obtained under the same condition as in the first example.

As can be seen from FIG. 5, the common mode current may be reduced according to the first example by a few dBμA to a few ten dBμA on a frequency band equal to or higher than 20 MHz compared to the comparative example.

These results were obtained for the first example described above by making simulations using circuit constants that had been designed to satisfy the impedance balance condition. Actually, however, the circuit constants will vary from one constituent element to another. Thus, simulations were carried out with all circuit constants but the capacitance C7 of the seventh capacitor 7 set at the same values as the ones shown in Table 1 and with the capacitance C7 of the seventh capacitor 7 varied. The results of those simulations are summarized in the following Table 2. According to the first example, the impedance balance condition is satisfied only when the capacitance C7 of the seventh capacitor 7 is 4 nF. Note that the value of the common mode current in Table 2 is the value of the common mode current at 50 MHz.

[Table 2]

| | Capacitance C7 | Common Mode Current |
|---|---|---|
| Comparative Example | - | 46.1 dBμA |
| Example 2 | 2 nF | 45.6 dBμA |
| Example 3 | 3 nF | 43.5 dBμA |
| Example 1 | 4 nF | 29.8 dBμA |
| Example 4 | 5 nF | 30.9 dBμA |
| Example 5 | 6 nF | 31.6 dBμA |
| Example 6 | 7 nF | 32.6 dBμA |
| Example 7 | 8 nF | 39.5 dBμA |

As can be seen from Table 2, if the capacitance C7 of the seventh capacitor 7 satisfies the impedance balance condition (i.e., when C7 = 4 nF), the common mode current becomes minimum. In addition, it can also be seen that even if the capacitance C7 of the seventh capacitor 7 does not satisfy the impedance balance condition but has a value a half to twice as large as the value when the impedance balance condition is satisfied, the common mode current may be reduced compared to the comparative example.

(4) Advantages

A boost converter 100 according to the first embodiment includes a first capacitor 1, second capacitor 2, a first inductor 11, a second inductor 12, a third capacitor 3, a fourth capacitor 4, a third inductor 13, a fourth inductor 14, a fifth capacitor 5, a sixth capacitor 6, and a seventh capacitor 7. The seventh capacitor 7 is connected between the third node N3

and the fourth capacitor 4. This allows the boost converter 100 according to the first embodiment to contribute to downsizing while reducing common mode noise. More specifically, the boost converter 100 according to the first embodiment includes the second inductor 12, the second capacitor 2, the third inductor 13, the fourth inductor 14, and the seventh capacitor 7, and therefore, the equivalent circuit on the MHz band will be a circuit having a Wheatstone bridge circuit configuration. This allows the boost converter 100 according to the first embodiment to reduce the common mode noise without using any common mode choke coil, thus contributing to downsizing while reducing the common mode noise.

In addition, the boost converter 100 according to the first embodiment may further reduce the common mode noise if the capacitance C7 of the seventh capacitor 7 has a value satisfying the equation (3).

Furthermore, the boost converter 100 according to the first embodiment may use, if the capacitance C7 of the seventh capacitor 7 has a value satisfying the equation (4), a capacitor having a larger tolerance in capacitance C7 as the seventh capacitor 7, thus cutting down the cost of the seventh capacitor 7 and eventually reducing the overall cost of the boost converter 100.

(5) Variations of first embodiment

(5.1) First variation

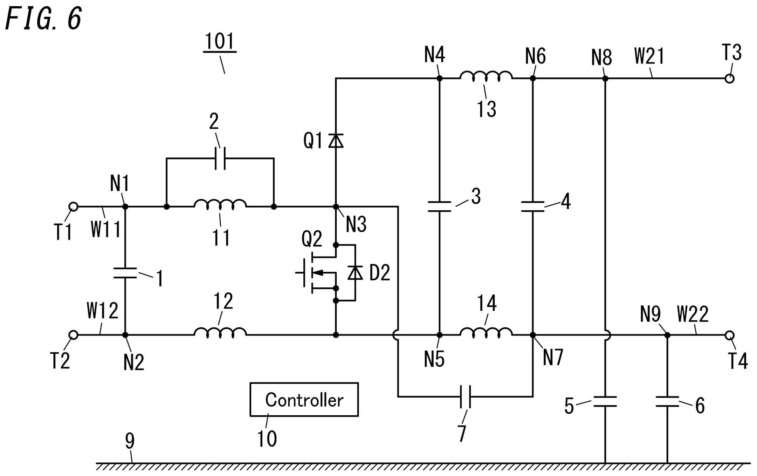

A boost converter 101 according to a first variation of the first embodiment will be described with reference to FIG. 6. In the following description, any constituent element of the boost converter 101 according to the first variation, having the same function as a counterpart of the boost converter 100 (refer to FIGS. 1 and 2) according to the first embodiment described above, will be designated by the same reference numeral as that counterpart's, and description thereof will be omitted herein.

In the boost converter 101 according to the first variation, the first switching element Q1 is implemented as a diode, which is a difference from the boost converter 100 according to the first embodiment. In the diode serving as the first switching element Q1, the anode of the diode is connected to the second switching element Q2 via the third node N3 and the cathode of the diode is connected to the second positive-side wiring section W21. In the boost converter 101 according to the first variation, the controller 10 controls the ON/OFF states of the second switching element Q2.

The boost converter 101 according to the first variation, as well as the boost converter 100 according to the first embodiment, includes the seventh capacitor 7, and therefore, may contribute to downsizing while reducing the common mode noise.

(5.2) Second variation

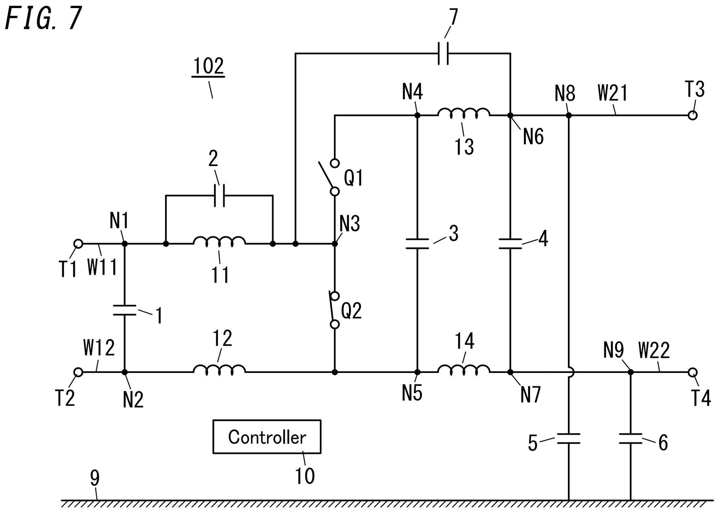

A boost converter 102 according to a second variation of the first embodiment will be described with reference to FIG. 7. In the following description, any constituent element of the boost converter 102 according to the second variation, having the same function as a counterpart of the boost converter 100 (refer to FIGS. 1 and 2) according to the first embodiment described above, will be designated by the same reference numeral as that counterpart's, and description thereof will be omitted herein.

In the boost converter 102 according to the second variation, the seventh capacitor 7 is not connected between the third node N3 and the seventh node N7 but connected between the third node N3 and the sixth node N6, which is a difference from the boost converter 100 according to the first embodiment described above.

In the boost converter 102 according to the second variation, as well as in the boost converter 100 according to the first embodiment described above, the first node N1 and the second node N2 may be regarded as the same node on the MHz band. Thus, the equivalent circuit of the boost converter 102 on the MHz band according to the second variation is the same as the one shown in FIG. 3. Consequently, the boost converter 102 according to the second variation, as well as the boost converter 100 according to the first embodiment, includes the seventh capacitor 7, and therefore, may contribute to downsizing while reducing the common mode noise.

In addition, in the boost converter 100 according to the first embodiment, the wiring section between the third node N3 and the seventh capacitor 7 intersects with the second negative-side wiring section W22 when viewed in plan in a thickness direction defined with respect to the circuit board. Thus, a configuration in which a multilayer printed wiring board is adopted as the circuit board and a part of the wiring section between the third node N3 and the seventh capacitor 7 is extended, through a via conductor, for example, to a different layer of the circuit board from the layer including the second negative-side wiring section W22 is sometimes adopted. In contrast, in the boost converter 102 according to the second variation, the wiring section between the third node N3 and the seventh capacitor 7 does not intersect with any other wiring section (including the second positive-side wiring section W21 and the second negative-side wiring section W22), thus reducing the chances of generating unnecessary parasitic inductance components in the wiring section between the third node N3 and the seventh capacitor 7. In addition, the boost converter 102 according to the second variation allows the wiring section between the third node N3 and the seventh capacitor 7, the second positive-side wiring section W21, and the second negative-side wiring section W22 to be laid out on the same layer, thus increasing the degree of freedom of wiring design of the circuit board.

(5.3) Third variation

A boost converter 100 according to a third variation of the first embodiment has the same circuit configuration as the boost converter 100 (refer to FIGS. 1 and 2) according to the first embodiment described above, and therefore, illustration thereof is omitted.

In the boost converter 100 according to the third variation, each of the second inductor 12, the third inductor 13, and the fourth inductor 14 is implemented as a chip inductor, and each of the second capacitor 2 and the seventh capacitor 7 is implemented as a chip capacitor, which is a difference from the boost converter 100 according to the first embodiment. Each of the inductance L2 of the second inductor 12, the inductance L3 of the third inductor 13, and the inductance L4 of the fourth inductor 14 may be, for example, equal to or greater than 2 nH and equal to or less than 30 nH. Each of the capacitance C2 of the second capacitor 2 and the capacitance C7 of the seventh capacitor 7 may be equal to or greater than 2 nF and equal to or less than 30 nF.

The boost converter 100 according to the third variation makes it easier to calculate the impedance between the first node N1 and the third node N3, the impedance between the second node N2 and the fifth node N5, the impedance between the fourth node N4 and the sixth node N6, and the impedance between the fifth node N5 and the seventh node N7, thus making it easier to design the boost converter 100 that satisfies the impedance balance condition.

(Second embodiment)

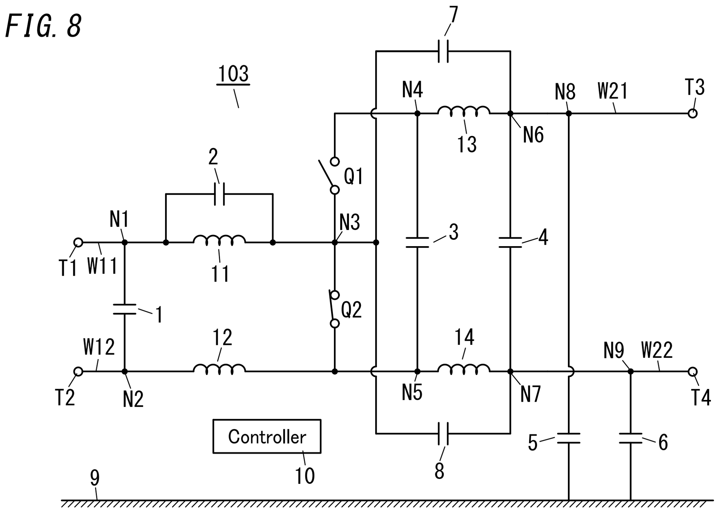

A boost converter 103 according to a second embodiment will be described with reference to FIG. 8. In the following description, any constituent element of the boost converter 103 according to the second embodiment, having the same function as a counterpart of the boost converter 102 (refer to FIG. 7) according to the second variation of the first embodiment described above, will be designated by the same reference numeral as that counterpart's, and description thereof will be omitted herein.

(1) Configuration

The boost converter 103 according to the second embodiment further includes an eighth capacitor 8 connected between the third node N3 and the seventh node N7, which is a difference from the boost converter 102 according to the second variation of the first embodiment. Thus, the boost converter 103 according to the second embodiment includes the seventh capacitor 7 connected between the first end of the fourth capacitor 4 and the third node N3 and the eighth capacitor 8 connected between the second end of the fourth capacitor 4 and the third node N3.

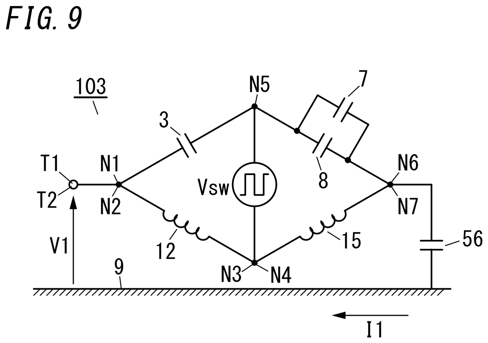

FIG. 9 is a circuit diagram illustrating an equivalent circuit of the boost converter 103 on the MHz band as shown in FIG. 8. In FIG. 9, the inductor 15 is an inductor having parallel combined inductance (= (L3 × L4) / (L3 + L4)) of the third inductor 13 and the fourth inductor 14. Also, in FIG. 9, the capacitor 56 is a capacitor having parallel combined capacitance (= C5 + C6) of the fifth capacitor 5 and the sixth capacitor 6.

The equivalent circuit of the boost converter 103 on the MHz band according to the second embodiment has the Wheatstone bridge circuit configuration as in the first embodiment described above. The impedance balance condition according to the second embodiment is expressed by the following equation (5):

$$\frac{1}{C2} : L2 = \frac{1}{C7 + C8} : \frac{L3 \times L4}{L3 + L4} \tag{5}$$

where C8 is the capacitance of the eighth capacitor 8.

The boost converter 103 may reduce, by designing respective circuit constants (L2, L3, L4, C2, C7, C8) to satisfy the impedance balance condition defined by the equation (5), the generation of the common mode noise due to the operations of the first switching element Q1 and the second switching element Q2 irrespective of the frequency on the MHz band.

In this case, the equation (5) may be modified into the following equation (6):

$$C7 + C8 = C2 \times \left\{ L2 \div \left( \frac{L3 \times L4}{L3 + L4} \right) \right\} \qquad (6)$$

Thus, the boost converter 103 may further reduce, by designing respective circuit constants (L2, L3, L4, C2, C7, C8) to satisfy the condition defined by the equation (6), the generation of the common mode noise due to the operations of the first switching element Q1 and the second switching element Q2 irrespective of the frequency on the MHz band.

To reduce the generation of the common mode noise compared to a situation where neither the seventh capacitor 7 nor the eighth capacitor 8 is provided, the combined capacitance (C7 + C8) of the seventh capacitor 7 and the eighth capacitor 8 does not have to have a value satisfying the impedance balance condition but may also have a value a half to twice as large as the value when the impedance balance condition is satisfied. That is to say, (C7 + C8) may have a value satisfying the following equation (7):

$$0.5 \times C2 \times \left\{ L2 \div \left( \frac{L3 \times L4}{L3 + L4} \right) \right\} \leqq (C7 + C8) \leqq 2 \times C2 \times \left\{ L2 \div \left( \frac{L3 \times L4}{L3 + L4} \right) \right\} \qquad (7)$$

That is to say, even if the impedance balance condition is not satisfied, the boost converter 103 may also reduce the common mode noise compared to a configuration including no seventh capacitor 7 or eighth capacitor 8, as long as (C7 + C8) has a value a half to twice as large as the value when the impedance balance condition is satisfied.

(2) Advantages

A boost converter 103 according to the second embodiment includes a first capacitor 1, second capacitor 2, a first inductor 11, a second inductor 12, a third capacitor 3, a fourth inductor 14, a fifth capacitor 5, a sixth capacitor 6, a seventh capacitor 7 and an eighth capacitor 8. The seventh capacitor 7 is connected between the third node N3 and the sixth node N6. The eighth capacitor 8 is connected between the third node N3 and the seventh node N7. This allows the boost converter 103 according to the second embodiment to contribute to downsizing while reducing common mode noise. More specifically, the boost converter 103 according to the third embodiment includes the second capacitor 2, the second inductor 12, the third inductor 13, the fourth inductor 14, the seventh capacitor 7, and the eighth capacitor 8, and therefore, the equivalent circuit on the MHz band will be a circuit having a Wheatstone bridge circuit configuration. This allows the boost converter 103 according to the second embodiment to reduce the common mode noise without using any common mode choke coil, thus contributing to downsizing while reducing the common mode noise.

In addition, the boost converter 103 according to the second embodiment includes the eighth capacitor 8, thus allowing each of the seventh capacitor 7 and the eighth capacitor 8 to have capacitance smaller than the capacitance of the seventh capacitor 7 in the boost converter 100 according to the first embodiment. This allows the boost converter 103 according to the second embodiment to reduce the capacitance components in a first current loop when the first switching element Q1 is in ON state and the capacitance components in a second current loop when the second switching element Q2 is in ON state, thus reducing the generation of ringing due to LC resonance. The first current loop is a current loop including the first switching element Q1, the seventh capacitor 7, and the third inductor 13. The second current loop is a current loop including the second switching element Q2, the eighth capacitor 8, and the fourth inductor 14.

In addition, the boost converter 103 according to the second embodiment may further reduce the common mode noise if (C7 + C8) has a value satisfying the equation (6) described above.

Furthermore, the boost converter 103 according to the second embodiment may use, if (C7 + C8) has a value satisfying the equation (7), a capacitor having a larger tolerance in capacitance as each of the seventh capacitor 7 and the eighth capacitor 8, thus cutting down the cost of the seventh capacitor 7 and the eighth capacitor 8 and eventually reducing the overall cost of the boost converter 103.

(Third embodiment)

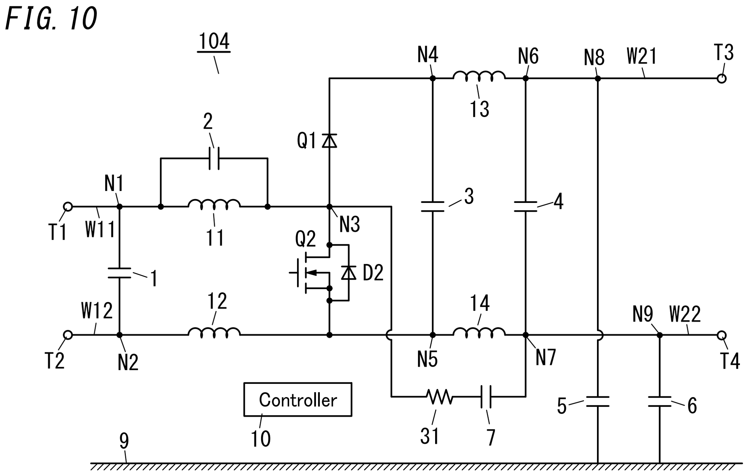

A boost converter 104 according to a third embodiment will be described with reference to FIG. 10. In the following description, any constituent element of the boost converter 104 according to the third embodiment, having the same function as a counterpart of the boost converter 101 (refer to FIG. 6) according to the first variation of the first embodiment described above, will be designated by the same reference numeral as that counterpart's, and description thereof will be omitted herein.

(1) Configuration

The boost converter 104 according to the third embodiment further includes a resistor 31 connected to the seventh capacitor 7 in series between the third node N3 and the seventh node N7, which is a difference from the boost converter 101 according to the first variation of the first embodiment. In the boost converter 104, the resistor 31 is connected between the seventh capacitor 7 and the third node N3.

In the boost converter 104, the impedance of the resistor 31 on the MHz band is sufficiently smaller than the impedance of the seventh capacitor 7 on the MHz band. As used herein, the expression "the impedance of the resistor 31 on the MHz band is sufficiently smaller than the impedance of the seventh capacitor 7 on the MHz band" means that as for the impedance on the MHz band, the impedance of the resistor 31 is preferably equal to or less than one-tenth, and more preferably equal to or less than one-hundredth, of the impedance of the seventh capacitor 7. In the boost converter 104, the circuit constant of the resistor 31 is set to make the impedance of the resistor 31 on the MHz band sufficiently smaller than the impedance of the seventh capacitor 7 on the MHz band. The resistor 31 has a characteristic that its impedance is constant irrespective of the frequency. The seventh capacitor 7 has a characteristic that its impedance decreases as the frequency increases.

In the boost converter 104 according to the third embodiment, the impedance of the resistor 31 on the MHz band is sufficiently smaller than the impedance of the seventh capacitor 7 on the MHz band. Thus, in the equivalent circuit of the boost converter 104 on the MHz band, the resistor 31 may be ignored. Accordingly, the equivalent circuit of the boost converter 104 on the MHz band is the same as the equivalent circuit of the boost converter 100 on the MHz band according to the first embodiment. Consequently, the impedance balance condition according to the third embodiment is the same as the impedance balance condition according to the first embodiment and is the same as the one expressed by the equation (2). Note that in the boost converter 104, the first switching element Q1 is implemented as a diode. Alternatively, the first switching element Q1 may also be implemented as an n-channel MOSFET as in the boost converter 100 according to the first embodiment.

(2) Advantages

The boost converter 104 according to the third embodiment, as well as the boost converter 100 according to the first embodiment, includes the seventh capacitor 7, thus contributing to downsizing while reducing the common mode noise.

In addition, the boost converter 104 according to the third embodiment further includes a resistor 31 connected to the seventh capacitor 7 in series between the third node N3 and the seventh node N7. Thus, the resistor 31 is also included in the current loop including the second diode D2, the seventh capacitor 7, and the fourth inductor 14.

This configuration may reduce not only the resonance in the current loop but also ringing when the second switching element Q2 makes a transition from the OFF state to the ON state, thus allowing for further reducing the common mode noise.

(Other variations)

Note that the first to third embodiments and their variations described above are only exemplary ones of various embodiments of the present disclosure and their variations and should not be construed as limiting. Rather, the first to third embodiments and their variations may be readily modified in various manners depending on a design choice or any other factor without departing from the scope of the present disclosure.

Each of the first switching element Q1 and second switching element Q2 in the boost converter 100 according to the first embodiment does not have to be an n-channel MOSFET but may also be a p-channel MOSFET. Also, in the first embodiment described above, each of the first switching element Q1 and the second switching element Q2 is an Si-based MOSFET. However, this is only an example and should not be construed as limiting. Alternatively, each of the first switching element Q1 and the second switching element Q2 may also be, for example, an SiC-based MOSFET. Still alternatively, each of the first switching element Q1 and the second switching element Q2 may also be, for example, a bipolar transistor, an insulated gate bipolar transistor (IGBT) or a GaN-based gate injection transistor (GIT).

Optionally, the resistor 31 described for the third embodiment may also be provided for each of the second variation of the first embodiment, the third variation of the first embodiment, and the second embodiment.

(Aspects)

The foregoing description provides specific implementations for the following aspects of the present disclosure.

A boost converter (100; 101; 102; 103) according to a first aspect includes a positive electrode input terminal (T1) and a negative electrode input terminal (T2), a positive electrode output terminal (T3) and a negative electrode output terminal (T4), a first positive-side wiring section (W11), a first negative-side wiring section (W12), a second positive-side wiring section (W21), a second negative-side wiring section (W22), a first capacitor (1), a first switching element (Q1), a second switching element (Q2), a first inductor (11), a second inductor (12), a second capacitor (2), a third capacitor (3), a fourth capacitor (4), a third inductor (13), a fourth inductor (14), a ground conductor member (9), a fifth capacitor (5), a sixth capacitor (6), and a seventh capacitor (7). The first positive-side wiring section (W11) is connected to the positive electrode input terminal (T1). The first negative-side wiring section (W12) is connected to the negative electrode input terminal (T2). The second positive-side wiring section (W21) is connected to the positive electrode output terminal (T3). The second negative-side wiring section (W22) is connected to the negative electrode output terminal (T4). The first capacitor (1) is connected between a first node (N1) of the first positive-side wiring section (W11) and a second node (N2) of the first negative-side wiring section (W12). The first switching element (Q1) is connected between the first positive-side wiring section (W11) and the second positive-side wiring section (W21). The second switching element (Q2) is connected between the first switching element (Q1) and the first negative-side wiring section (W12). The first inductor (11) is provided between a third node (N3) where the first switching element (Q1) and the second switching element (Q2) are connected together and the first node (N1). The second inductor (12) is provided between a connection node where the second switching element (Q2) is connected to the first negative-side wiring section (W12) and the second node (N2). The second capacitor (2) is connected to the first inductor (11) in parallel. The third capacitor (3) is connected between a fourth node (N4) of the second positive-side wiring section (W21) and a fifth node (N5) of the second negative-side wiring section (W22). The fourth capacitor (4) is connected between a sixth node (N6) of the second positive-side wiring section (W21) and a seventh node (N7) of the second negative-side wiring section (W22). The third inductor (13) is provided between the fourth node (N4) and the sixth node (N6). The fourth inductor (14) is provided between the fifth node (N5) and the seventh node (N7). The fifth capacitor (5) is connected between an eight node (N8) of the second positive-side wiring section (W21) and the ground conductor member (9). The sixth capacitor (6) is connected between a ninth node (N9) of the second negative-side wiring section (W22) and the ground conductor member (9). The seventh capacitor (7) is connected between the third node (N3) and the fourth capacitor (4).

This aspect may contribute to downsizing while reducing common mode noise.

In a boost converter (100; 101; 102; 103) according to a second aspect, which may be implemented in conjunction with the first aspect, the seventh capacitor (7) is connected between the third node (N3) and the sixth node (N6).

This aspect may reduce the chances of producing unnecessary parasitic inductance components between the third node (N3) and the seventh capacitor (7).

A boost converter (100; 101; 102; 104) according to a third aspect, which may be implemented in conjunction with the first or second aspect, satisfies

$$C7 = C2 \times \left\{ L2 \div \left( \frac{L3 \times L4}{L3 + L4} \right) \right\}$$

where C2 is capacitance of the second capacitor (2), L2 is inductance of the second inductor (12), L3 is inductance of the third inductor (13), L4 is inductance of the fourth inductor (14), and C7 is capacitance of the seventh capacitor (7).

This aspect allows the common mode noise to be further reduced.

A boost converter (100; 101; 102; 104) according to a fourth aspect, which may be implemented in conjunction with the first or second aspect, satisfies

$$0.5 \times C2 \times \left\{ L2 \div \left( \frac{L3 \times L4}{L3 + L4} \right) \right\} \leqq C7 \leqq 2 \times C2 \times \left\{ L2 \div \left( \frac{L3 \times L4}{L3 + L4} \right) \right\}$$

where C2 is capacitance of the second capacitor (2), L2 is inductance of the second inductor (12), L3 is inductance of the third inductor (13), L4 is inductance of the fourth inductor (14), and C7 is capacitance of the seventh capacitor (7).

This aspect allows a capacitor with a larger tolerance in capacitance to be used as the seventh capacitor (7), thus cutting down the cost of the seventh capacitor (7) and eventually reducing the overall cost of the boost converter (100; 101; 102; 104).

A boost converter (103) according to a fifth aspect, which may be implemented in conjunction with the second aspect, further includes an eighth capacitor (8) connected between the third node (N3) and the seventh node (N7).

This aspect allows capacitance components produced in a first current loop when the first switching element (Q1) is ON and capacitance components produced in a second current loop when the second switching element (Q2) is ON to be reduced, thereby reducing the occurrence of ringing due to LC resonance.

A boost converter (103) according to a sixth aspect, which may be implemented in conjunction with the fifth aspect, satisfies

$$C7 + C8 = C2 \times \left\{ L2 \div \left( \frac{L3 \times L4}{L3 + L4} \right) \right\}$$

where C2 is capacitance of the second capacitor (2), L2 is inductance of the second inductor (12), L3 is inductance of the third inductor (13), L4 is inductance of the fourth inductor (14), C7 is capacitance of the seventh capacitor (7), and C8 is capacitance of the eighth capacitor (8).

This aspect allows the common mode noise to be further reduced.

A boost converter (103) according to a seventh aspect, which may be implemented in conjunction with the fifth aspect, satisfies

$$0.5 \times C2 \times \left\{ L2 \div \left( \frac{L3 \times L4}{L3 + L4} \right) \right\} \leqq (C7 + C8) \leqq 2 \times C2 \times \left\{ L2 \div \left( \frac{L3 \times L4}{L3 + L4} \right) \right\}$$

where C2 is capacitance of the second capacitor (2), L2 is inductance of the second inductor (12), L3 is inductance of the third inductor (13), L4 is inductance of the fourth inductor (14), C7 is capacitance of the seventh capacitor (7), and C8 is capacitance of the eighth capacitor (8).

This aspect allows a capacitor with a larger tolerance in capacitance to be used as each of the seventh capacitor (7) and the eighth capacitor (8), thus cutting down the cost of the seventh capacitor (7) and the eighth capacitor (8) and eventually reducing the overall cost of the boost converter (103).

In a boost converter (100; 101; 102; 103; 104) according to an eighth aspect, which may be implemented in conjunction with any one of the first to seventh aspects, the second inductor (12) is configured by a part of the first negative-side wiring section (W12), the third inductor (13) is configured by a part of the second positive-side wiring section (W21), and the fourth inductor (14) is configured by a part of the second negative-side wiring section (W22).

This aspect allows the number of components required to be reduced, thus contributing to downsizing and cost reduction.

In a boost converter (100; 101; 102; 103; 104) according to a ninth aspect, which may be implemented in conjunction with any one of the first to eighth aspects, the first inductor (11) is a choke coil, and the second capacitor (2) is interwinding capacitance of the choke coil.

This aspect allows the number of components required to be reduced, thus contributing to downsizing and cost reduction.

A boost converter (100; 101; 102; 103; 104) according to a tenth aspect, which may be implemented in conjunction with any one of the first to ninth aspects, further includes a resistor (31) connected to the seventh capacitor (7) in series between the third node (N3) and the seventh node (N7).

This aspect allows the common mode noise to be further reduced.

**Reference Signs List**

| | |
|---|---|
| 1 | First Capacitor |
| 2 | Second Capacitor |
| 3 | Third Capacitor |
| 4 | Fourth Capacitor |
| 5 | Fifth Capacitor |
| 6 | Sixth Capacitor |
| 7 | Seventh Capacitor |
| 8 | Eighth Capacitor |
| 9 | Ground Conductor Member |
| 10 | Controller |
| 11 | First Inductor |

| 12 | Second Inductor |
| 13 | Third Inductor |
| 14 | Fourth Inductor |
| 31 | Resistor |
| 100, 101, 102, 103, 104 | Boost Converter |
| Q1 | First Switching Element |
| Q2 | Second Switching Element |
| T1 | Positive Electrode Input Terminal |
| T2 | Negative Electrode Input Terminal |
| T3 | Positive Electrode Output Terminal |
| T4 | Negative Electrode Output Terminal |
| W11 | First Positive-Side Wiring Section |
| W12 | First Negative-Side Wiring Section |
| W21 | Second Positive-Side Wiring Section |
| W22 | Second Negative-Side Wiring Section |

**Claims**

1. A boost converter comprising:

a positive electrode input terminal and a negative electrode input terminal;

a positive electrode output terminal and a negative electrode output terminal;

a first positive-side wiring section connected to the positive electrode input terminal;

a first negative-side wiring section connected to the negative electrode input terminal;

a second positive-side wiring section connected to the positive electrode output terminal;

a second negative-side wiring section connected to the negative electrode output terminal;

a first capacitor connected between a first node of the first positive-side wiring section and a second node of the first negative-side wiring section;

a first switching element connected between the first positive-side wiring section and the second positive-side wiring section;

a second switching element connected between the first switching element and the first negative-side wiring section;

a first inductor provided between a third node where the first switching element and the second switching element are connected together and the first node;

a second inductor provided between a connection node where the second switching element is connected to the first negative-side wiring section and the second node;

a second capacitor connected to the first inductor in parallel;

a third capacitor connected between a fourth node of the second positive-side wiring section and a fifth node of the second negative-side wiring section;

a fourth capacitor connected between a sixth node of the second positive-side wiring section and a seventh node of the second negative-side wiring section;

a third inductor provided between the fourth node and the sixth node;

a fourth inductor provided between the fifth node and the seventh node;

a ground conductor member;

a fifth capacitor connected between an eighth node of the second positive-side wiring section and the ground conductor member;

a sixth capacitor connected between a ninth node of the second negative-side wiring section and the ground conductor member; and

a seventh capacitor connected between the third node and the fourth capacitor.

2. The boost converter of claim 1, wherein
the seventh capacitor is connected between the third node and the sixth node.

3. The boost converter of claim 1 or 2, wherein
the boost converter satisfies

$$C7 = C2 \times \left\{ L2 \div \left( \frac{L3 \times L4}{L3 + L4} \right) \right\}$$

where C2 is capacitance of the second capacitor, L2 is inductance of the second inductor, L3 is inductance of the third inductor, L4 is inductance of the fourth inductor, and C7 is capacitance of the seventh capacitor.

4. The boost converter of claim 1 or 2, wherein
the boost converter satisfies

$$0.5 \times C2 \times \left\{ L2 \div \left( \frac{L3 \times L4}{L3 + L4} \right) \right\} \leqq C7 \leqq 2 \times C2 \times \left\{ L2 \div \left( \frac{L3 \times L4}{L3 + L4} \right) \right\}$$

where C2 is capacitance of the second capacitor, L2 is inductance of the second inductor, L3 is inductance of the third inductor, L4 is inductance of the fourth inductor, and C7 is capacitance of the seventh capacitor.

5. The boost converter of claim 2, further comprising an eighth capacitor connected between the third node and the seventh node.

6. The boost converter of claim 5, wherein
the boost converter satisfies

$$C7 + C8 = C2 \times \left\{ L2 \div \left( \frac{L3 \times L4}{L3 + L4} \right) \right\}$$

where C2 is capacitance of the second capacitor, L2 is inductance of the second inductor, L3 is inductance of the third inductor, L4 is inductance of the fourth inductor, C7 is capacitance of the seventh capacitor, and C8 is capacitance of the eighth capacitor.

7. The boost converter of claim 5, wherein
the boost converter satisfies

$$0.5 \times C2 \times \left\{ L2 \div \left( \frac{L3 \times L4}{L3 + L4} \right) \right\} \leqq (C7 + C8) \leqq 2 \times C2 \times \left\{ L2 \div \left( \frac{L3 \times L4}{L3 + L4} \right) \right\}$$

where C2 is capacitance of the second capacitor, L2 is inductance of the second inductor, L3 is inductance of the third inductor, L4 is inductance of the fourth inductor, C7 is capacitance of the seventh capacitor, and C8 is capacitance of the eighth capacitor.

8. The boost converter of any one of claims 1 to 7, wherein

the second inductor is configured by a part of the first negative-side wiring section,
the third inductor is configured by a part of the second positive-side wiring section, and
the fourth inductor is configured by a part of the second negative-side wiring section.

9. The boost converter of any one of claims 1 to 8, wherein

the first inductor is a choke coil, and
the second capacitor is interwinding capacitance of the choke coil.

10. The boost converter of any one of claims 1 to 9, further comprising a resistor connected to the seventh capacitor in series between the third node and the seventh node.

EP 4 657 737 A1

FIG. 1

FIG. 2

FIG. 3

FIG. 4

*FIG. 5*

FIG. 6

FIG. 7

EP 4 657 737 A1

FIG. 8

FIG. 9

EP 4 657 737 A1

FIG. 10

## INTERNATIONAL SEARCH REPORT

| International application No. |
| --- |
| **PCT/JP2024/000695** |

| A. | CLASSIFICATION OF SUBJECT MATTER |
| --- | --- |

*H02M 3/00*(2006.01)i
FI:  H02M3/00 A

According to International Patent Classification (IPC) or to both national classification and IPC

| B. | FIELDS SEARCHED |
| --- | --- |

Minimum documentation searched (classification system followed by classification symbols)

H02M3/00-3/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2018/021510 A1 (PANASONIC INTELLECTUAL PROPERTY MANAGEMENT CO., LTD.) 01 February 2018 (2018-02-01) entire text, all drawings | 1-10 |
| A | JP 2017-041524 A (KABUSHIKI KAISHA TOYOTA CHUO KENKYUSHO) 23 February 2017 (2017-02-23) entire text, all drawings | 1-10 |
| A | JP 2016-174502 A (TOYOTA JIDOSHA KABUSHIKI KAISHA) 29 September 2016 (2016-09-29) entire text, all drawings | 1-10 |
| A | US 2008/0061748 A1 (WANG, Shuo) 13 March 2008 (2008-03-13) entire text, all drawings | 1-10 |
| A | JP 2012-239333 A (DENSO CORPORATION) 06 December 2012 (2012-12-06) entire text, all drawings | 1-10 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 February 2024** | **12 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/000695**

| Patent document cited in search report | | | Publication date (day/month/year) | Patent family member(s) | Publication date (day/month/year) |
|---|---|---|---|---|---|
| WO | 2018/021510 | A1 | 01 February 2018 | US 2019/0165666 A1 entire text, all drawings | |
| JP | 2017-041524 | A | 23 February 2017 | (Family: none) | |
| JP | 2016-174502 | A | 29 September 2016 | (Family: none) | |
| US | 2008/0061748 | A1 | 13 March 2008 | (Family: none) | |
| JP | 2012-239333 | A | 06 December 2012 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017002550 A1